# EUROPEAN PATENT SPECIFICATION

(11) **EP 3 188 370 B1**
(45) Date of publication and mention of the grant of the patent: **19.06.2019**
(21) Application number: 16201716.4
(22) Date of filing: 01.12.2016
(51) Int. Cl.: H04B 7/08, H04B 7/06, H04B 1/40, H04W 88/02, H04B 1/10, H04B 17/309, H01Q 1/24, H04W 52/02

(54) **TERMINAL HAVING COMMUNICATION FUNCTION**
ENDGERÄT MIT KOMMUNIKATIONSFUNKTION
TERMINAL PRÉSENTANT UNE FONCTION DE COMMUNICATION

(30) Priority: 07.12.2015 CN 201510892154
(43) Date of publication of application: 05.07.2017
(73) Proprietor: Xiaomi Inc., Beijing 100085 (CN)
(72) Inventor: XIONG, Xiaofeng, Beijing 100085 (CN); XUE, Zonglin, Beijing 100085 (CN); WANG, Linchuan, Beijing 100085 (CN)
(74) Representative: Delumeau, François Guy

(56) References cited:
- US-A1- 2012 282 982
- US-A1- 2015 188 599

## Description

### TECHNICAL FIELD

The present invention generally relates to the communication technical field, and more particularly, to a terminal having a communication function.

### BACKGROUND

With developments of communication technologies, terminals such as mobile phones have more and more functions, and have become one of the necessary parts in our daily life. People can use terminals to chat with friends or family, buy things online, and watch video programs and the like. All these functions are associated with antennas disposed in the terminals. An antenna of a terminal is generally disposed within the terminal, for example, at the bottom of the terminal, to enable the terminal to transmit data.

If a user inadvertently holds a portion of the terminal where the antenna is disposed, the resistance value of the antenna will be changed. Thus, the resonance frequency of the antenna will deviate, and thereby the quality for data transmission will be influenced

Document US 2015/0188599 A1 discloses a methods and systems for operating a wireless electronic device having one or more antennas. The method comprises monitoring at least one parameter of a signal received from a remote transmitter. The method includes determining that the at least one parameter meets a first threshold and performing, at the wireless electronic device, a probing operation. The probing operation includes performing an antenna switching operation.

Document US2012/0282982 A1 discloses a device including a radio-frequency transceiver circuitry coupled to multiple antennas. An electronic device may alternate between a sleep mode and a wake mode. If received signal quality falls below a threshold or is otherwise indicated to not be satisfactory, the device may switch to use of a different one of the multiple antennas in monitoring the paging channel.

### SUMMARY

In order to overcome problems existing in related technologies, the present invention provides a terminal having a communication function. The technical solutions are as follows.

The invention is defined by the appended independent claims. Preferred embodiments of the invention are specified by the dependent claims.

Any aspect, embodiment, or example described in the following which does not fall within the scope of the claimed invention thus defined is to be interpreted as background information provided to facilitate the understanding of the claimed invention and the subject-matter for which protection is sought is strictly and solely limited to those embodiments encompassed by the scope of the appended claims.

According to a first aspect of embodiments of the present invention, there is provided a terminal having a communication function, including:
a first multiband antenna;
a second multiband antenna;
a radio frequency transceiver including a primary carrier wave port and a secondary carrier wave port; and
a switching control circuit electrically connected with the primary carrier wave port, the secondary carrier wave port, the first multiband antenna and the second multiband antenna;
wherein the switching control circuit is configured to connect the primary carrier wave port with the first multiband antenna and connect the secondary carrier wave port with the second multiband antenna if signal quality of the first multiband antenna meets a preset quality condition.

According to the invention, the switching control circuit is configured to:
if the signal quality of the first multiband antenna does not meet the preset quality condition and signal quality of the second multiband antenna meets the preset quality condition, connect the primary carrier wave port with the second multiband antenna and connect the secondary carrier wave port with the first multiband antenna;
wherein the switching control circuit is further configured to:
   if the signal quality of the first multiband antenna does not meet the preset quality condition and the signal quality of the second multiband antenna does not meet the preset quality, connect the primary carrier wave port with the first multiband antenna and connect the secondary carrier wave port with the second multiband antenna.

In this way, the communication quality of the terminal can be guaranteed.

According to an embodiment of the the invention, the first multiband antenna and the second multiband antenna are disposed at two different ends within the terminal, respectively.

In this way, the situation that the first multiband antenna and the second multiband antenna influence each other can be prevented.

According to an embodiment, the first multiband antenna and the second multiband antenna are ultra-wideband antennas.

In this way, the first multiband antenna and the second multiband antenna can support a plurality of frequency bands.

According to an embodiment, the switching control circuit includes a controller, a first electrically controllable selection switch and a second electrically controllable selection switch;
wherein:
a control signal terminal of the first electrically controllable selection switch and a control signal terminal of the second electrically controllable selection switch are electrically connected with the controller;
the controller is electrically connected with the radio frequency transceiver;
the first electrically controllable selection switch is electrically connected with the primary carrier wave port, the first multiband antenna and the second multiband antenna; and
the second electrically controllable selection switch is electrically connected with the secondary carrier wave port, the first multiband antenna and the second multiband antenna.

In this way, switching between the first multiband antenna and the second multiband antenna which are connected with the primary carrier wave port and the secondary carrier wave port respectively can be realized.

According to an embodiment, the controller is configured to:
obtain the signal quality of the first multiband antenna detected by the radio frequency transceiver;
if the signal quality of the first multiband antenna meets the preset quality condition, control the first electrically controllable selection switch to connect the primary carrier wave port with the first multiband antenna and control the second electrically controllable selection switch to connect the secondary carrier wave port with the second multiband antenna, and if the signal quality of the first multiband antenna does not meet the preset quality condition, control the first electrically controllable selection switch to connect the primary carrier wave port with the second multiband antenna and control the second electrically controllable selection switch to connect the secondary carrier wave port with the first multiband antenna.

In this way, the communication quality of the terminal can be guaranteed.

According to an embodiment, the controller is a baseband controller.

According to an embodiment, a resistance adjustment circuit is disposed in a connection line for connecting the second electrically controllable selection switch and the first multiband antenna, and the resistance adjustment circuit includes a plurality of resistance adjustment branches which are connected in parallel; and
wherein a control signal terminal of the resistance adjustment circuit is electrically connected with the baseband controller.

According to an embodiment, the controller is further configured to:
if determine that the signal quality of the first multiband antenna does not meet the preset quality condition, obtain a resonance frequency offset of a currently used secondary carrier which is detected by the radio frequency transceiver;
according to pre-stored correspondence relationships between resonance frequency offsets and resistance adjustment branches, determine a first resistance adjustment branch corresponding to the resonance frequency offset of the currently used secondary carrier; and
control the resistance adjustment circuit to turn on the first resistance adjustment branch and turn off resistance adjustment branches other than the first resistance adjustment branch.

In this way, the data transmission efficiency of the terminal can be improved.

According to an embodiment, if a signal strength reaches a preset threshold, it is determined that the signal quality meets the preset quality condition, and if the signal strength does not reach the preset threshold, it is determined that the signal quality does not meet the preset quality condition.

The technical solutions provided by embodiments of the present invention can have the following advantageous effects:
In the embodiments of the present invention, the terminal includes a first multiband antenna, a second multiband antenna, a radio frequency transceiver, and a switching control circuit; the radio frequency transceiver includes a primary carrier wave port and a secondary carrier wave port; the switching control circuit is electrically connected with the primary carrier wave port, the secondary carrier wave port, the first multiband antenna and the second multiband antenna; and the switching control circuit is configured to connect the primary carrier wave port with the first multiband antenna and connect the secondary carrier wave port with the second multiband antenna if signal quality of the first multiband antenna meets a preset quality condition, and connect the primary carrier wave port with the second multiband antenna and connect the secondary carrier wave port with the first multiband antenna if the signal quality of the first multiband does not meet the preset quality condition. That is, if the signal quality of the first multiband antenna is relatively good, the first multiband antenna functions as the primary carrier wave antenna, and if the signal quality of the first multiband antenna is relatively poor, the terminal uses the second multiband antenna as the primary wave antenna to conduct communications. Thus, the influence on the quality of data transmission of the terminal can be reduced.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a schematic diagram of a terminal having a communication function according to an exemplary embodiment.
Fig. 2 is a schematic diagram of a terminal having a communication function according to an exemplary embodiment.
Fig. 3 is a schematic diagram of a terminal having a communication function according to an exemplary embodiment.

**Listing of reference signs**

| | |
|---|---|
| 1 first multiband antenna | 2 second multiband antenna |
| 3 radio frequency transceiver | 4 switching control circuit |
| 31 primary carrier wave port | 32 secondary carrier wave port |
| 41 controller | 42 first electrically controllable selection switch |
| 43 second electrically controllable selection switch | 44 resistance adjustment circuit |
| 421 control signal terminal | 431 control signal terminal |
| 441 resistance adjustment branch | 442 control signal terminal |

Exemplary embodiments of the present invention are shown in the above drawings, and detailed description will be provided later. These drawings and literal descriptions are not intended to restrict the scope of the present invention in any way, but to convey the conception of the present invention to one of ordinary skill in this art by exemplary embodiments.

### DETAILED DESCRIPTION

In order to make the objectives, technical solutions and advantages of the present invention more clear, the implementations of the present invention will be described below in detail with reference to drawings.

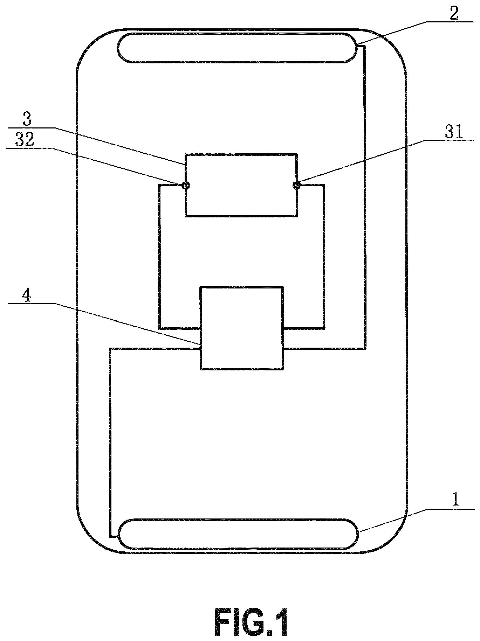

Fig. 1 is a terminal having a communication function according to an exemplary embodiment of the present invention. As shown in Fig. 1 (in order to show detailed structure of local parts, the terminal is not completely depicted in this drawing), the terminal includes a first multiband antenna 1, a second multiband antenna 2, a radio frequency transceiver 3 and a switching control circuit 4. The radio frequency transceiver 3 includes a primary carrier wave port 31 and a secondary carrier wave port 32. The switching control circuit 4 is electrically connected with the primary carrier wave port 31, the secondary carrier wave port 32, the first multiband antenna 1 and the second multiband antenna 2. The switching control circuit 4 is configured to connect the primary carrier wave port 31 with the first multiband antenna 1 and connect the secondary carrier wave port 32 with the second multiband antenna 2 if signal quality of the first multiband antenna 1 meets a preset quality condition, and connect the primary carrier wave port 31 with the second multiband antenna 2 and connect the secondary carrier wave port 32 with the first multiband antenna 1 if the signal quality of the first multiband antenna 1 does not meet the preset quality condition. In this document, the term "signal quality of the first multiband antenna" and the like means quality (for example, measured by signal strength, signal-to-noise ratio SNR, attenuation, etc.) of a signal that is received by the antenna in question,

In the embodiment, the terminal may include the first multiband antenna 1, the second multiband antenna 2, the radio frequency transceiver 3 and the switching control circuit 4, and the first multiband antenna 1 and the second multiband antenna 2 can be used to receive and send signals. The first multiband antenna 1 and the second multiband antenna 2 can support (bear) a plurality of working frequency bands, including all possible frequency bands of primary carrier wave(s) and secondary carrier wave(s), and the working frequency bands supported by the first and second multiband antennas 1 and 2 can be the same. The radio frequency transceiver 3 can include the primary carrier wave port 31 and the secondary carrier wave port 32. The switching control circuit 4 can be electrically connected with the primary carrier wave port 31, the secondary carrier wave port 32, the first multiband antenna 1 and the second multiband antenna 2.

When a technician sets a terminal, he/she can designate a preset quality condition of the first multiband antenna 1 (for example, a threshold of a signal strength), and store the preset quality condition in the terminal. If the signal quality of the first multiband antenna 1 meets the preset quality condition, the first multiband antenna 1 can conduct communication normally.

After obtaining the signal quality of the first multiband antenna 1, the switching control circuit 4 can obtain the pre-stored preset quality condition, compare the signal quality of the first multiband antenna 1 with the preset quality condition; if the signal quality of the first multiband antenna 1 meets the preset quality condition, the switching control circuit 4 can connect the first multiband antenna 1 with the primary carrier wave port 31, and connect the second multiband antenna 2 with the secondary carrier wave port 32; if the signal quality of the first multiband antenna 1 does not meet the preset quality condition (for example, the user may inadvertently holds a portion of the terminal where the first multiband antenna 1 is disposed, thereby resulting in offset (or deviation) in resonance frequency of the first multiband antenna 1, for example, deviation from a nominal resonance frequency or a designed resonance frequency of the first multiband antenna 1), the switching control circuit 4 can connect the primary carrier wave port 31 with the second multiband antenna 2, and connect the secondary carrier wave port 32 with the first multiband antenna 1. In this way, when the signal quality of the first multiband antenna 1 is relatively poor, the second multiband antenna 2 can be used to conduct communication. Thus, the communication quality of the terminal can be guaranteed.

According to an embodiment, that the signal quality meets the preset quality condition includes that the signal strength reaches a preset threshold; and that the signal quality does not meet the preset quality condition includes that the signal strength does not reach the preset threshold.

In the embodiment, if the signal strength (of a signal received by the first multiband antenna 1) reaches the preset threshold, it can be determined that the signal quality (of the first multiband antenna 1) meets the preset quality condition. If the signal strength of a signal received by the first multiband antenna 1 reaches the preset threshold, the first multiband antenna 1 can receive and send signals normally. If the signal strength does not reach the preset threshold, it can be determined that the signal quality does not meet the preset quality condition (in other words, the signal strength is lower than the preset threshold). If the signal strength of a signal received by the first multiband antenna 1 does not reach the preset threshold, the first multiband antenna 1 can not receive and send signals normally.

According to an embodiment, as shown in Fig. 1, the first multiband antenna 1 and the second multiband antenna 2 can be disposed respectively at two different ends within the terminal.

In the embodiment, the first multiband antenna 1 and the second multiband antenna 2 can be disposed at two different ends within the terminal (for example, at the upper end and the lower end of the terminal). For example, the first multiband antenna 1 can be disposed at the lower end of the terminal, and the second multiband antenna 2 can be disposed at the upper end of the terminal. In this way, the first multiband antenna 1 and the second multiband antenna 2 are disposed at two ends of the terminal, the distance between the two antennas is relatively far, and thus it is unlikely that the two antennas influence each other.

According to an embodiment, the first multiband antenna 1 and the second multiband antenna 2 are ultra-wideband antennas.

In the embodiment, the first multiband antenna 1 and the second multiband antenna 2 may be ultra-wideband antennas. The first multiband antenna 1 and the second multiband antenna 2 can support a plurality of working frequency bands, including all possible frequency bands of primary carrier wave(s) and secondary carrier wave(s), and the working frequency bands supported by the first and second multiband antennas 1 and 2 can be the same. Thus, the first multiband antenna 1 and the second multiband antenna 2 can support a plurality of working frequency bands, and thereby the number of the antennas can be reduced.

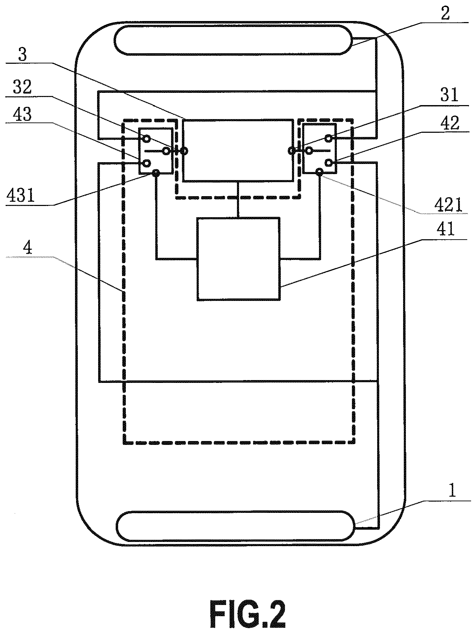

According to an embodiment, as shown in Fig. 2, the switching control circuit 4 includes a controller 41, a first electrically controllable selection switch 42 and a second electrically controllable selection switch 43. A control signal terminal 421 of the first electrically controllable selection switch 42 and a control signal terminal 431 of the second electrically controllable selection switch 43 are electrically connected with the controller 41 . The controller 41 is electrically connected with the radio frequency transceiver 3. The first electrically controllable selection switch 42 is electrically connected with the primary carrier wave port 31, the first multiband antenna 1 and the second multiband antenna 2. The second electrically controllable selection switch 43 is electrically connected with the secondary carrier wave port 32, the first multiband antenna 1 and the second multiband antenna 2.

In the embodiment, the switching control circuit 4 can include the controller 41, the first electrically controllable selection switch 42 and the second electrically controllable selection switch 43; the first electrically controllable selection switch 42 and the second electrically controllable selection switch 43 can be provided with a control signal terminal 421 and a control signal terminal 431, respectively; the control signal terminal 421 of the first electrically controllable selection switch 42 and the control signal terminal 431 of the second electrically controllable selection switch 43 can be electrically connected with the controller 41; the controller 41 is electrically connected with the radio frequency transceiver 3; the first electrically controllable selection switch 42 is electrically connected with the primary carrier wave port 31, the first multiband antenna 1 and the second multiband antenna 2, and the first electrically controllable selection switch 42 can enable the primary carrier wave port 31 to be connected with the first multiband antenna 1 or with the second multiband antenna 2; the second electrically controllable selection switch 43 is electrically connected with the secondary carrier wave port 32, the first multiband antenna 1 and the second multiband antenna 2, and the second electrically controllable selection switch 43 can enable the secondary carrier wave port 32 to be electrically connected with the first multiband antenna 1 or with the second multiband antenna 2.

According to an embodiment, the controller 41 is configured to: obtain the signal quality of the first multiband antenna 1 detected by the radio frequency transceiver 3; and if the signal quality of the first multiband antenna 1 meets the preset quality condition, control the first electrically controllable selection switch 42 to connect the primary carrier wave port 31 with the first multiband antenna 1 and control the second electrically controllable selection switch 43 to connect the secondary carrier wave port 32 with the second multiband antenna 2, and if the signal quality of the first multiband antenna 1 does not meet the preset quality condition, control the first electrically controllable selection switch 42 to connect the primary carrier wave port 31 with the second multiband antenna 2 and control the second electrically controllable selection switch 43 to connect the secondary carrier wave port 32 with the first multiband antenna 1.

In the embodiment, the radio frequency transceiver 3 can detect the signal quality of the first multiband antenna 1, the controller 41 can obtain the signal quality of the first multiband antenna 1 from the radio frequency transceiver 3, obtain the pre-stored preset quality condition, and compare the signal quality of the first multiband antenna 1 with the preset quality condition; if the signal quality of the first multiband antenna 1 meets the present quality condition, the controller 41 can control the first electrically controllable selection switch 42 to connect the primary carrier wave port 31 with the first multiband antenna 1, and control the second electrically controllable selection switch 43 to connect the secondary carrier wave port 32 with the second multiband antenna 2; if the signal quality of the first multiband antenna 1 does not meet the preset quality condition, the controller 41 can control the first electrically controllable selection switch 42 to connect the primary carrier wave port 31 with the second multiband antenna 2 (the working frequency band of the second multiband antenna 2 is the primary carrier wave under this condition), and control the second electrically controllable selection switch 43 to connect the secondary carrier wave port 32 with the first multiband antenna 1 (the working frequency band of the first multiband antenna 1 is the secondary carrier wave under this condition). In this way, if the signal quality of the first multiband antenna 1 does not meet the preset quality condition, the controller 41 can connect the primary carrier wave port 31 with the second multiband antenna 2, and thus the communication quality of the terminal can be guaranteed.

According to an embodiment, the switching control circuit 4 is configured to: if the signal quality of the first multiband antenna 1 does not meet the preset quality condition and signal quality of the second multiband antenna 2 meets the preset quality condition, connect the primary carrier wave port 31 with the second multiband antenna 2 and connect the secondary carrier wave port 32 with the first multiband antenna 1.

The switching control circuit 4 is further configured to: if the signal quality of the first multiband antenna 1 does not meet the preset quality condition and the signal quality of the second multiband antenna 2 does not meet the preset quality, connect the primary carrier wave port 31 with the first multiband antenna and connect the secondary carrier wave port 32 with the second multiband antenna 2.

In the embodiment, if the switching control circuit 4 determines that the current signal quality of the first multiband antenna 1 does not meet the preset quality condition, the switching control circuit 4 can obtain the signal quality of the second multiband antenna 2, compare the signal quality of the second multiband antenna 2 with the present quality condition; if determining that the current signal quality of the second multiband antenna 2 meets the preset signal quality, the switching control circuit 4 can connect the primary carrier wave port 31 with the second multiband antenna 2 (the working frequency band of the second multiband antenna 2 is the primary carrier wave under this condition) and connect the secondary carrier wave port 32 with the first multiband antenna 1 (the working frequency band of the first multiband antenna 1 is the secondary carrier wave under this condition), and thus the communication quality of the terminal can be guaranteed.

If the switching control circuit 4 determines that the current signal quality of the first multiband antenna 1 does not meet the preset quality condition, the switching control circuit 4 can obtain the signal quality of the second multiband antenna 2, compare the signal quality of the second multiband antenna 2 with the present quality condition; if determining that the signal quality of the second multiband antenna 2 does not meet the preset signal quality, the switching control circuit 4 can connect the primary carrier wave port 31 with the first multiband antenna 1 (the working frequency band of the first multiband antenna 1 is the primary carrier wave under this condition) and connect the secondary carrier wave port 32 with the second multiband antenna 2 (the working frequency band of the second multiband antenna 2 is the secondary carrier wave under this condition), and thus the communication quality of the terminal can be guaranteed.

According to an embodiment, the controller 41 is a baseband controller 41.

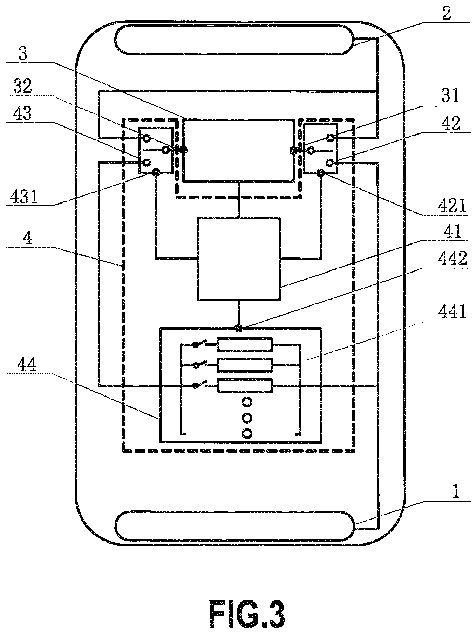

According to an embodiment, as shown in Fig. 3, a resistance adjustment circuit 44 is disposed in a connection line (or path) for connecting the second electrically controllable selection switch 43 and the first multiband antenna 1, and the resistance adjustment circuit 44 includes a plurality of resistance adjustment branches 441 which are connected in parallel; a control signal terminal 442 of the resistance adjustment circuit 44 is electrically connected with the baseband controller 41.

In the embodiment, the switching control circuit 4 can further include the resistance adjustment circuit 44 which is disposed in a connection line for connecting the second electrically controllable selection switch 43 and the first multiband antenna 1. The resistance adjustment circuit 44 can adjust the resonance frequency of the first multiband antenna 1 into the resonance frequency before deviation (for example, the nominal resonance frequency, the designed resonance frequency, etc. of the first multiband antenna 1). The resistance adjustment circuit 44 can include a plurality of resistance adjustment branches 441 which are connected in parallel (for example, the first resistance adjustment branch 441, the second resistance adjustment branch 441, and the like), and each of the plurality of resistance adjustment branches 441 can be provided with a control switch which is used for turning on or off a corresponding resistance adjustment branch 441. For example, the first resistance adjustment branch 441 can be provided with a first control switch, if the first control switch is in a closed state, the first resistance adjustment branch 441 can be in a conducted state (i.e. turned-on state). The resistance adjustment circuit is further provided with a control signal terminal 442 which is electrically connected with the baseband controller 41.

According to an embodiment, the controller 41 is further configured to: if determine that the signal quality of the first multiband antenna 1 does not meet the preset quality condition, obtain a resonance frequency offset of a currently used secondary carrier which is detected by the radio frequency transceiver 3; according to pre-stored correspondence relationships between resonance frequency offsets and resistance adjustment branches 441, determine a first resistance adjustment branch 441 corresponding to the resonance frequency offset of the currently used secondary carrier; and control the resistance adjustment circuit 44 to turn on the first resistance adjustment branch 441 and turn off resistance adjustment branches 441 other than the first resistance adjustment branch 441.

In an embodiment, a technician can pre-store the correspondence relationships between resonance frequency offsets and resistance adjustment branches 441 (for example, correspondence relationships between resonance frequency offsets and serial numbers of resistance adjustment branches 441), and if the signal quality of the first multiband antenna 1 does not meet the preset quality condition, the controller 41 controls the first electrically controllable selection switch 42 to connect the primary carrier wave port 31 with the second multiband antenna 2, and controls the second electrically controllable selection switch 43 to connect the secondary carrier wave port 32 with the first multiband antenna 1. Then, the controller 41 can obtain the currently used frequency band of the secondary carrier wave, and send a request for obtaining the resonance frequency offset to the radio frequency transceiver 3. After receiving the request, the radio frequency transceiver 3 can determine the current resonance frequency offset of the first multiband antenna 1, and sends the resonance frequency offset to the controller 41. After receiving the resonance frequency offset, the controller 41 can obtain the pre-stored correspondence relationships between resonance frequency offsets and serial numbers of resistance adjustment branches 441, and search, according to the obtained resonance frequency offset, a resistance adjustment branch 441 corresponding to the resonance frequency offset as the first resistance adjustment branch 441. Then the controller 41 sends a control instruction to the resistance adjustment circuit 44, wherein the serial number of the first resistance adjustment branch 441 is carried in the control instruction. After receiving the control instruction, the resistance adjustment circuit 44 parses the control instruction to obtain the serial number of the first resistance adjustment branch 441, turns on the first resistance adjustment branch 441, and turns off resistance adjustment branches 441 other than the first resistance adjustment branch 441 in the resistance adjustment circuit 44. Thus, the first resistance adjustment branch 441 can adjust the resonance frequency of the first multiband antenna 1 into the resonance frequency before deviation, the terminal can use the currently used primary carrier wave and secondary carrier wave to realize out-of-band carrier aggregation, and thereby the data transmission efficiency of the terminal can be improved.

Or, if the signal quality of the first multiband antenna 1 does not meet the preset quality condition, the radio frequency transceiver 3 can detect that the resonance frequency of the first multiband antenna 1 deviates from a predetermined resonance frequency such as a nominal or designed resonance frequency (which results in a resonance frequency offset), the radio frequency transceiver 3 can send a notification to the controller 41 to notify the resonance frequency deviation (or resonance frequency offset), and the notification can carry the current resonance frequency offset of the first multiband antenna 1. After receiving the resonance frequency offset, the controller 41 can obtain the pre-stored correspondence relationships between resonance frequency offsets and serial numbers of resistance adjust branches 441, and search, according to the obtained resonance frequency offset, a resistance adjustment branch 441 corresponding to the resonance frequency offset as the first resistance adjustment branch 441. Then, the controller 41 sends a control instruction to the resistance adjustment circuit 44, and the serial number of the first resistance adjustment branch 441 is carried in the control instruction. After receiving the control instruction, the resistance adjustment circuit 44 parses the control instruction to obtain the serial number of the first resistance adjustment branch 441, turns on the first resistance adjustment branch 441, and turns off resistance adjustment branches 441 other than the first resistance adjustment branch 441 in the resistance adjustment circuit 44. Thus, the first branch resistance adjustment branch 441 can adjust the resonance frequency of the first multiband antenna 1 into the resonance frequency before deviation, the terminal can use the currently used primary carrier wave and secondary carrier wave to realize out-of-band carrier aggregation, and thereby the data transmission efficiency of the terminal can be improved.

In the embodiments of the present invention, the terminal includes a first multiband antenna, a second multiband antenna, a radio frequency transceiver, and a switching control circuit; the radio frequency transceiver includes a primary carrier wave port and a secondary carrier wave port; the switching control circuit is electrically connected with the primary carrier wave port, the secondary carrier wave port, the first multiband antenna and the second multiband antenna; and the switching control circuit is configured to connect the primary carrier wave port with the first multiband antenna and connect the secondary carrier wave port with the second multiband antenna if signal quality of the first multiband antenna meets a preset quality condition, and connect the primary carrier wave port with the second multiband antenna and connect the secondary carrier wave port with the first multiband antenna if the signal quality of the first multiband does not meet the preset quality condition. That is, if the signal quality of the first multiband antenna is relatively good, the first multiband antenna functions as the primary carrier wave antenna, and if the signal quality of the first multiband antenna is relatively poor, the terminal uses the second multiband antenna as the primary wave antenna to conduct communications. Thus, the influence on the quality of data transmission of the terminal can be reduced.

## Claims

1. A terminal having a communication function, comprising:
a first multiband antenna (1);
a second multiband antenna (2);
a radio frequency transceiver (3) comprising a primary carrier wave port (31) and a secondary carrier wave port (32); and
a switching control circuit (4) electrically connected with the primary carrier wave port (31), the secondary carrier wave port (32), the first multiband antenna (1) and the second multiband antenna (2);
wherein
the switching control circuit (4) is configured to:
(i)connect the primary carrier wave port (31) with the first multiband antenna (1) and connect the secondary carrier wave port (32) with the second multiband antenna (2) if a signal quality of the first multiband antenna (1) meets a preset quality condition,
(ii) if the signal quality of the first multiband antenna (1) does not meet the preset quality condition and a signal quality of the second multiband antenna (2) meets the preset quality condition, connect the primary carrier wave port (31) with the second multiband antenna (2) and connect the secondary carrier wave port (32) with the first multiband antenna (1);
(iii) if the signal quality of the first multiband antenna (1) does not meet the preset quality condition and the signal quality of the second multiband antenna (2) does not meet the preset quality condition, connect the primary carrier wave port (31) with the first multiband antenna (1) and connect the secondary carrier wave port (32) with the second multiband antenna (2).

2. The terminal according to claim 1, wherein the first multiband antenna (1) and the second multiband antenna (2) are disposed at two different ends within the terminal, respectively.

3. The terminal according to claim 1, wherein the first multiband antenna (1) and the second multiband antenna (2) are ultra-wideband antennas.

4. The terminal according to claim 1, wherein the switching control circuit comprises a controller (41), a first electrically controllable selection switch (42) and a second electrically controllable selection switch (43);
wherein:
a control signal terminal (421) of the first electrically controllable selection switch (42) and a control signal terminal (431) of the second electrically controllable selection switch (43) are electrically connected with the controller (41);
the controller (41) is electrically connected with the radio frequency transceiver (3);
the first electrically controllable selection switch (42) is electrically connected with the primary carrier wave port (31), the first multiband antenna (1) and the second multiband antenna (2); and
the second electrically controllable selection switch (43) is electrically connected with the secondary carrier wave port (32), the first multiband antenna (1) and the second multiband antenna (2).

5. The terminal according to claim 4, wherein the controller (41) is configured to:
obtain the signal quality of the first multiband antenna (1) detected by the radio frequency transceiver (3);
if the signal quality of the first multiband antenna (1) meets the preset quality condition, control the first electrically controllable selection switch (42) to connect the primary carrier wave port (31) with the first multiband antenna (1) and control the second electrically controllable selection switch (43) to connect the secondary carrier wave port (32) with the second multiband antenna (2), and if the signal quality of the first multiband antenna (1) does not meet the preset quality condition, control the first electrically controllable selection switch (42) to connect the primary carrier wave port (31) with the second multiband antenna (2) and control the second electrically controllable selection switch (43) to connect the secondary carrier wave port (32)with the first multiband antenna (1).

6. The terminal according to claim 4, wherein the controller (41) is a baseband controller.

7. The terminal according to claim 6, wherein a resistance adjustment circuit (44) is disposed in a connection line for connecting the second electrically controllable selection switch (43) and the first multiband antenna (1), and the resistance adjustment circuit (44) comprises a plurality of resistance adjustment branches (441) which are connected in parallel; and
wherein a control signal terminal (442) of the resistance adjustment circuit (44) is electrically connected with the baseband controller (41).

8. The terminal according to claim 7, wherein the controller (41) is further configured to:
if determine that the signal quality of the first multiband antenna (1) does not meet the preset quality condition, obtain a resonance frequency offset of a currently used secondary carrier which is detected by the radio frequency transceiver (3);
according to pre-stored correspondence relationships between resonance frequency offsets and resistance adjustment branches, determine a first resistance adjustment branch (441) corresponding to the resonance frequency offset of the currently used secondary carrier; and
control the resistance adjustment circuit (44) to turn on the first resistance adjustment branch (441)and turn off resistance adjustment branches (441) other than the first resistance adjustment branch (441).

9. The terminal according to claim 1, wherein if a signal strength reaches a preset threshold, it is determined that the signal quality meets the preset quality condition, and if the signal strength does not reach the preset threshold, it is determined that the signal quality does not meet the preset quality condition.

## Patentansprüche

1. Endgerät mit einer Kommunikationsfunktion, umfassend:
eine erste Mehrbandantenne (1),
eine zweite Mehrbandantenne (2),
einen Hochfrequenz-Sendeempfänger (3), der einen primären Trägerwellenanschluss (31) und einen sekundären Trägerwellenanschluss (32) umfasst, und
eine Schaltsteuerschaltung (4), die elektrisch mit dem primären Trägerwellenanschluss (31), dem sekundären Trägerwellenanschluss (32), der ersten Mehrbandantenne (1) und der zweiten Mehrbandantenne (2) verbunden ist,
wobei die Schaltsteuerschaltung (4) ausgestaltet ist zum:
(i) Verbinden des primären Trägerwellenanschlusses (31) mit der ersten Mehrbandantenne (1) und Verbinden des sekundären Trägerwellenanschlusses (32) mit der zweiten Mehrbandantenne (2), wenn eine Signalqualität der ersten Mehrbandantenne (1) eine voreingestellte Qualitätsbedingung erfüllt,
(ii) wenn die Signalqualität der ersten Mehrbandantenne (1) die voreingestellte Qualitätsbedingung nicht erfüllt und eine Signalqualität der zweiten Mehrbandantenne (2) die voreingestellte Qualitätsbedingung erfüllt, Verbinden des primären Trägerwellenanschlusses (31) mit der zweiten Mehrbandantenne (2) und Verbinden des sekundären Trägerwellenanschlusses (32) mit der ersten Mehrbandantenne (1),
(iii) wenn die Signalqualität der ersten Mehrbandantenne (1) die voreingestellte Qualitätsbedingung nicht erfüllt und die Signalqualität der zweiten Mehrbandantenne (2) die voreingestellte Qualitätsbedingung nicht erfüllt, Verbinden des primären Trägerwellenanschlusses (31) mit der ersten Mehrbandantenne (1) und Verbinden des sekundären Trägerwellenanschlusses (32) mit der zweiten Mehrbandantenne (2).

2. Endgerät nach Anspruch 1, wobei die erste Mehrbandantenne (1) und die zweite Mehrbandantenne (2) jeweils an zwei unterschiedlichen Enden innerhalb des Endgeräts angeordnet sind.

3. Endgerät nach Anspruch 1, wobei es sich bei der ersten Mehrbandantenne (1) und der zweiten Mehrbandantenne (2) um Ultrabreitband-Antennen handelt.

4. Endgerät nach Anspruch 1, wobei die Schaltsteuerschaltung eine Steuerung (41), einen ersten elektrisch steuerbaren Auswahlschalter (42) und einen zweiten elektrisch steuerbaren Auswahlschalter (43) umfasst,
wobei:
ein Steuersignalanschluss (421) des ersten elektrisch steuerbaren Auswahlschalters (42) und ein Steuersignalanschluss (431) des zweiten elektrisch steuerbaren Auswahlschalters (43) elektrisch mit der Steuerung (41) verbunden sind,
die Steuerung (41) elektrisch mit dem Hochfrequenz-Sendeempfänger (3) verbunden ist,
der erste elektrisch steuerbare Auswahlschalter (42) elektrisch mit dem primären Trägerwellenanschluss (31), der ersten Mehrbandantenne (1) und der zweiten Mehrbandantenne (2) verbunden ist, und
der zweite elektrisch steuerbare Auswahlschalter (43) elektrisch mit dem sekundären Trägerwellenanschluss (32), der ersten Mehrbandantenne (1) und der zweiten Mehrbandantenne (2) verbunden ist.

5. Endgerät nach Anspruch 4, wobei die Steuerung (41) ausgestaltet ist zum:
Erhalten der Signalqualität der ersten Mehrbandantenne (1), die durch den Hochfrequenz-Sendeempfänger (3) detektiert wird;
wenn die Signalqualität der ersten Mehrbandantenne (1) die voreingestellte Qualitätsbedingung erfüllt, Steuern des ersten elektrisch steuerbaren Auswahlschalters (42), um den primären Trägerwellenanschluss (31) mit der ersten Mehrbandantenne (1) zu verbinden, und Steuern des zweiten elektrisch steuerbaren Auswahlschalters (43), um den sekundären Trägerwellenanschluss (32) mit der zweiten Mehrbandantenne (2) zu verbinden, und wenn die Signalqualität der ersten Mehrbandantenne (1) die voreingestellte Qualitätsbedingung nicht erfüllt, Steuern des ersten elektrisch steuerbaren Auswahlschalters (42), um den primären Trägerwellenanschluss (31) mit der zweiten Mehrbandantenne (2) zu verbinden, und Steuern des zweiten elektrisch steuerbaren Auswahlschalters (43), um den sekundären Trägerwellenanschluss (32) mit der ersten Mehrbandantenne (1) zu verbinden.

6. Endgerät nach Anspruch 4, wobei es sich bei der Steuerung (41) um eine Basisband-Steuerung handelt.

7. Endgerät nach Anspruch 6, wobei eine Widerstandsanpassungsschaltung (44) in einer Verbindungsleitung zum Verbinden des zweiten elektrisch steuerbaren Auswahlschalters (43) und der ersten Mehrbandantenne (1) angeordnet ist und die Widerstandsanpassungsschaltung (44) mehrere Widerstandsanpassungsabzweigungen (441) umfasst, die parallel geschaltet sind, und
wobei ein Steuersignalanschluss (442) der Widerstandsanpassungsschaltung (44) elektrisch mit der Basisband-Steuerung (41) verbunden ist.

8. Endgerät nach Anspruch 7, wobei die Steuerung (41) ferner ausgestaltet ist zum:
wenn bestimmt wird, dass die Signalqualität der ersten Mehrbandantenne (1) die voreingestellte Qualitätsbedingung nicht erfüllt, Erhalten eines Resonanzfrequenzversatzes eines aktuell verwendeten sekundären Trägers, der durch den Hochfrequenz-Sendeempfänger (3) detektiert wird,
gemäß vorab gespeicherten Entsprechungsbeziehungen zwischen Resonanzfrequenzversätzen und Widerstandsanpassungsabzweigungen, Bestimmen einer ersten Widerstandsanpassungsabzweigung (441), die dem Resonanzfrequenzversatz des aktuell verwendeten sekundären Trägers entspricht, und
Steuern der Widerstandsanpassungsschaltung (44), um die erste Widerstandsanpassungsabzweigung (441) anzuschalten und andere Widerstandsanpassungsabzweigungen (441) als die erste Widerstandsanpassungsabzweigung (441) auszuschalten.

9. Endgerät nach Anspruch 1, wobei, wenn eine Signalstärke einen voreingestellten Schwellenwert erreicht, bestimmt wird, dass die Signalqualität die voreingestellte Qualitätsbedingung erfüllt, und wenn die Signalstärke den voreingestellten Schwellenwert nicht erreicht, bestimmt wird, dass die Signalqualität die voreingestellte Qualitätsbedingung nicht erfüllt.

## Revendications

1. Terminal présentant une fonction de communication, comprenant :
une première antenne multibande (1) ;
une seconde antenne multibande (2) ;
un émetteur-récepteur radiofréquence (3) comprenant un port d'onde porteuse primaire (31) et un port d'onde porteuse secondaire (32) ; et
un circuit de commande de commutation (4) connecté électriquement au port d'onde porteuse primaire (31), au port d'onde porteuse secondaire (32), à la première antenne multibande (1) et à la seconde antenne multibande (2) ;
dans laquelle le circuit de commande de commutation (4) est configuré de manière à :
(i) connecter le port d'onde porteuse primaire (31) à la première antenne multibande (1) et connecter le port d'onde porteuse secondaire (32) à la seconde antenne multibande (2) si une qualité de signal de la première antenne multibande (1) satisfait une condition de qualité prédéfinie ;
(ii) si la qualité de signal de la première antenne multibande (1) ne satisfait pas la condition de qualité prédéfinie et si une qualité de signal de la seconde antenne multibande (2) satisfait la condition de qualité prédéfinie, connecter le port d'onde porteuse primaire (31) à la seconde antenne multibande (2) et connecter le port d'onde porteuse secondaire (32) à la première antenne multibande (i) ;
(iii) si la qualité de signal de la première antenne multibande (1) ne satisfait pas la condition de qualité prédéfinie et si la qualité de signal de la seconde antenne multibande (2) ne satisfait pas la condition de qualité prédéfinie, connecter le port d'onde porteuse primaire (31) à la première antenne multibande (1) et connecter le port d'onde porteuse secondaire (32) à la seconde antenne multibande (2).

2. Terminal selon la revendication 1, dans laquelle la première antenne multibande (1) et la seconde antenne multibande (2) sont disposées à deux extrémités différentes dans le terminal, respectivement.

3. Terminal selon la revendication 1, dans laquelle la première antenne multibande (1) et la seconde antenne multibande (2) sont des antennes à bande ultra-large.

4. Terminal selon la revendication 1, dans laquelle le circuit de commande de commutation comprend un contrôleur (41), un premier commutateur de sélection pouvant être commandé électriquement (42) et un second commutateur de sélection pouvant être commandé électriquement (43) ;
dans laquelle :
une borne de signal de commande (421) du premier commutateur de sélection pouvant être commandé électriquement (42) et une borne de signal de commande (431) du second commutateur de sélection pouvant être commandé électriquement (43) sont connectées électriquement au contrôleur (41) ;
le contrôleur (41) est connecté électriquement à l'émetteur-récepteur radiofréquence (3) ;
le premier commutateur de sélection pouvant être commandé électriquement (42) est connecté électriquement au port d'onde porteuse primaire (31), à la première antenne multibande (1) et à la seconde antenne multibande (2) ; et
le second commutateur de sélection pouvant être commandé électriquement (43) est connecté électriquement au port d'onde porteuse secondaire (32), à la première antenne multibande (1) et à la seconde antenne multibande (2).

5. Terminal selon la revendication 4, dans laquelle le contrôleur (41) est configuré de manière à :
obtenir la qualité de signal de la première antenne multibande (1) détectée par l'émetteur-récepteur radiofréquence (3) ;
si la qualité de signal de la première antenne multibande (1) satisfait la condition de qualité prédéfinie, commander au premier commutateur de sélection pouvant être commandé électriquement (42) de connecter le port d'onde porteuse primaire (31) à la première antenne multibande (1), et commander au second commutateur de sélection pouvant être commandé électriquement (43) de connecter le port d'onde porteuse secondaire (32) à la seconde antenne multibande (2), et si la qualité de signal de la première antenne multibande (1) ne satisfait pas la condition de qualité prédéfinie, commander au premier commutateur de sélection pouvant être commandé électriquement (42) de connecter le port d'onde porteuse primaire (31) à la seconde antenne multibande (2) et commander au second commutateur de sélection pouvant être commandé électriquement (43) de connecter le port d'onde porteuse secondaire (32) à la première antenne multibande (1).

6. Terminal selon la revendication 4, dans laquelle le contrôleur (41) est un contrôleur de bande de base.

7. Terminal selon la revendication 6, dans laquelle un circuit d'ajustement de résistance (44) est disposé dans une ligne de connexion pour connecter le second commutateur de sélection pouvant être commandé électriquement (43) et la première antenne multibande (1), et le circuit d'ajustement de résistance (44) comprend une pluralité de branches d'ajustement de résistance (441) qui sont connectées en parallèle ; et
dans laquelle une borne de signal de commande (442) du circuit d'ajustement de résistance (44) est connectée électriquement au contrôleur de bande de base (41).

8. Terminal selon la revendication 7, dans laquelle le contrôleur (41) est en outre configuré de manière à :
s'il est déterminé que la qualité de signal de la première antenne multibande (1) ne satisfait pas la condition de qualité prédéfinie, obtenir un décalage de fréquence de résonance d'une porteuse secondaire actuellement utilisée qui est détectée par l'émetteur-récepteur radiofréquence (3) ;
selon des relations de correspondance stockées au préalable entre des décalages de fréquence de résonance et des branches d'ajustement de résistance, déterminer une première branche d'ajustement de résistance (441) correspondant au décalage de fréquence de résonance de la porteuse secondaire actuellement utilisée ; et
commander au circuit d'ajustement de résistance (44) d'activer la première branche d'ajustement de résistance (441) et de désactiver les branches d'ajustement de résistance (441) distinctes de la première branche d'ajustement de résistance (441).

9. Terminal selon la revendication 1, dans laquelle, si une intensité de signal atteint un seuil prédéfini, il est déterminé que la qualité de signal satisfait la condition de qualité prédéfinie, et si l'intensité de signal n'atteint pas le seuil prédéfini, il est déterminé que la qualité de signal ne satisfait pas la condition de qualité prédéfinie.
